(19) **Europäisches Patentamt / European Patent Office / Office européen des brevets**

(11) **EP 4 742 484 A1**

(12) # EUROPEAN PATENT APPLICATION

(43) Date of publication:
**13.05.2026 Bulletin 2026/20**

(21) Application number: **25214839.0**

(22) Date of filing: **11.11.2025**

(51) International Patent Classification (IPC):
*H02J 3/32* (2026.01)  *H02J 7/34* (2006.01)
*H02J 7/00* (2026.01)

(52) Cooperative Patent Classification (CPC):
**H02J 3/32; H02J 7/34; H02J 7/865;** H02J 2105/425

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.11.2024 US 202463719332 P
20.10.2025 US 202519363532**

(71) Applicant: **Vertiv Corporation
Westerville, OH 43082 (US)**

(72) Inventors:
• **Heber, Brian
Westerville, 43082 (US)**
• **Bush, Terry D.
Westerville, 43082 (US)**

(74) Representative: **Cousens, Nico et al
Kilburn & Strode LLP
Lacon London
84 Theobalds Road
London WC1X 8NL (GB)**

(54) **MANAGEMENT OF POWER DISTRIBUTION TO AND FROM A DATA CENTER**

(57)     Systems and methods for providing consistent and reliable power to a data center that is executing high-power and variable high-performance computing (HPC) and artificial intelligence (AI) workloads are disclosed. By installing a three-phase current sensor at or near the data center, or along the power grid before the power arrives at a power conversion system (PCS), the power conversion system is configured to response faster to changing and variable workloads that ramp up and down both quickly and inconsistently. A controller within the PCS is then configured to customize the amount of power that is sent to the data center coming from converted power from the grid, and from a battery energy storage system.

FIG. 1

**Description**

This application claims the benefit of and priority to U.S. Provisional Patent Application No. 63/719,332, filed November 12, 2024.

TECHNICAL FIELD

This disclosure relates to a system for stabilizing power to a data center that is executing large-scale and variable workloads.

BACKGROUND

The rapid development of advanced calculation systems driven by high-performance computing (HPC), artificial intelligence (AI), and other advanced computing techniques has changed the pattern of power demand within the data center that hosts the computing devices capable of executing those HPC and AI workloads. The amount of energy used to run simultaneous and more complex operations makes the power demand of such data centers change rapidly, e.g., hundreds of times per minute, thus creating a "pulsed energy" demand. Electrical providers, such as public grids, may indeed be sized for a total amount of required power for such types of operations, but they are not able to provide the pulsing energy required by these new loads. This situation can destabilize the grid, can cause power quality issues, or can even cause other more severe problems, such as data center providers that deploy large-scale HPC and AI workloads being "kicked off" the grid.

SUMMARY

An aspect of the disclosed embodiment includes a system for managing high-power and variable workloads at a data center. The system includes: a three-phase current sensor, configured to provide current measurements to a power conversion system, wherein the three-phase current sensor is located proximate to the data center or is located along a power grid that is providing power to the data center; and the power conversion system for the data center, comprising a controller, wherein: the power conversion system is configured to control a rate of power that is provided to the data center from a power grid and from a battery energy storage system that is coupled to the power conversion system; and to control the rate of power, the controller is configured to: receive an indication of a difference in current between current measured at the data center and current measured by the power grid based, at least in part, on the current measurements provided by the three-phase current sensor; and cause one or both of the rate of power from the power grid and the rate of power from the battery energy storage system to be adjusted based, at least in part, on the indication of the difference, to reduce the difference to approximately zero. Proximate to the data center may include being adjacent to the data center or directly adjacent to the data center.

Another aspect of the disclosed embodiment includes a method for managing power to a data center. The method includes: receiving three-phase voltage from a power grid; receiving a first three-phase current from a power conversion system that is coupled to a battery energy storage system; receiving a second three-phase current from a data center; applying a Phase Locked Loop to measure a frequency and a phase angle of the three-phase voltage from the power grid relative to a given phase; performing a first Parks-Clarke transformation to the first three-phase current and the phase angle of the three-phase voltage to output a first equivalent phase current; performing a second Parks-Clarke transformation to the second three-phase current and the phase angle of the three-phase voltage to output a second equivalent phase current; comparing the first equivalent phase current and the second equivalent phase current to an average equivalent phase current from the data center to output a difference between the three equivalent phase currents; and outputting a pulse-width modulation command to the power conversion system to generate a fourth equivalent phase current that reduces the difference to approximately zero.

BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.

FIG. 1 illustrates a controller within a Power Conversion System (PCS) that is configured to manage power into and out of a data center from the power grid and based, at least in part, on a three-phase current sensor located proximate to a data center side or a power grid side of the overall system, according to some embodiments.

FIG. 2 illustrates a visual indication of voltage and current measurements that are used to perform the management of power into and out of the data center within an overall system such as that which is illustrated in FIG. 1, according to some embodiments.

FIG. 3 illustrates a feedback control loop that corresponds to the management of power into and out of the data center within an overall system such as that which is illustrated in FIG. 1, according to some embodiments.

FIG. 4A illustrates an example of phase D current measured at the data center from a moment in time corresponding to the onset of an AI workload at the data center and through a subsequent period of time in which power to and from the power grid is managed from and to the data center, according to some embodiments.

FIG. 4B illustrates an example of phase D current measured on the power grid side from a moment in time corresponding to the onset of an AI workload at the data center and through a subsequent period of time in which power to and from the power grid is managed from and to the data center, according to some embodiments.

FIG. 4C illustrates an example of phase D current measured at the PCS from a moment in time corresponding to the onset of an AI workload at the data center and through a subsequent period of time in which power to and from the power grid is managed from and to the data center, according to some embodiments.

FIG. 5 is a flowchart that illustrates the execution of a control algorithm by the controller within the PCS, according to some embodiments.

FIG. 6A illustrates a simulation of current vs time for a duration of an example AI workload being executed at the data center, according to some embodiments.

FIG. 6B illustrates a simulation of current vs time that is measured at the PCS for the duration of the example AI workload being executed at the data center, according to some embodiments.

FIG. 6C illustrates input current vs time for the duration of the example AI workload being executed at the data center, according to some embodiments.

FIG. 6D illustrates battery voltage and power that is measured at the BESS for the duration of the example AI workload being executed at the data center, according to some embodiments.

FIG. 6E illustrates battery current that is measured at the BESS for the duration of the example AI workload being executed at the data center, according to some embodiments.

FIG. 6F illustrates current vs time of the current of the AI load at the data center, the current on the power grid side, and the current measured at the PCS for the duration of the example AI workload being executed at the data center, according to some embodiments.

FIG. 7 illustrates another example of a controller within a Power Conversion System (PCS) that is configured to manage power into and out of a server rack at a data center from the low voltage AC distribution unit of the data center and based, at least in part, on a three-phase current sensor located proximate to the server rack or the low voltage AC distribution unit of the overall system, according to some embodiments.

DETAILED DESCRIPTION

Reference will now be made in detail to example embodiments which are illustrated in the accompanying drawings, wherein like reference numerals refer to like elements throughout. In this regard, the example embodiments may have different forms and may not be construed as being limited to the descriptions set forth herein.
It will be understood that the terms "include," "including," "comprise," and/or "comprising," when used in this specification, specify the presence of stated features, integers, steps, operations, elements, and/or components, but do not preclude the presence or addition of one or more other features, integers, steps, operations, elements, components, and/or groups thereof.
It will be further understood that, although the terms "first," "second," "third," etc., may be used herein to describe various elements, components, regions, layers and/or sections, these elements, components, regions, layers and/or sections may not be limited by these terms. These terms are only used to distinguish one element, component, region, layer or section from another element, component, region, layer or section.

Moreover, it will be further understood that the terms "optimize," "optimal," "approximately," and the like as used herein can be used to mean making or achieving performance as effective or perfect as possible. However, as one of ordinary skill in the art reading this document will recognize, perfection cannot always be achieved. Accordingly, these terms can also encompass making or achieving performance as good or effective as possible or practical under the given circumstances, or making or achieving performance better than that which can be achieved with other settings or parameters, or making or achieving performance better than by not performing the actions, computations, etc. described herein.

As used herein, the term "and/or" includes any and all combinations of one or more of the associated listed items. Expressions such as "at least one of," when preceding a list of elements, modify the entire list of elements and do not modify the individual elements of the list.

Various terms are used to refer to particular system components. Different companies may refer to a component by different names - this document does not intend to distinguish between components that differ in name but not function.

Matters of these example embodiments that are obvious to those of ordinary skill in the technical field to which these example embodiments pertain may not be described herein in detail.

It may be understood that the example embodiments described herein may be considered in a descriptive sense only and not for purposes of limitation. Descriptions of features or aspects within each example embodiment may be considered as available for other similar features or aspects in other example embodiments.

As introduced above, high-power and variable demands are often requested for computer servers, computing devices, processors, and support equipment used for HPC and AI workload processing. Meeting both the high-power and the variable power demands of the data center may be challenging on both the side of the power grid company and on the side of the data center provider.

The present disclosure overcomes this challenge by incorporating additional three-phase current sensor measurements into a control algorithm that is executed by a controller within the PCS. By implementing a three-phase current sensor that provides periodic current measurements from either the power grid side or the data center side to a controller within a PCS, the PCS is configured to be more reactive to rapid and highly variable power demands for HPC and AI workloads being executed within the data center. By incorporating measurements of the additional three-phase current sensor into a control algorithm managed by a controller within the PCS, power consumption at the data center is more adapted for HPC and AI workloads. For example, the systems and methods described herein account for peak shaving (also referred to as load shedding), frequency stabilization, and the ability to sell excess power back to the power grid.

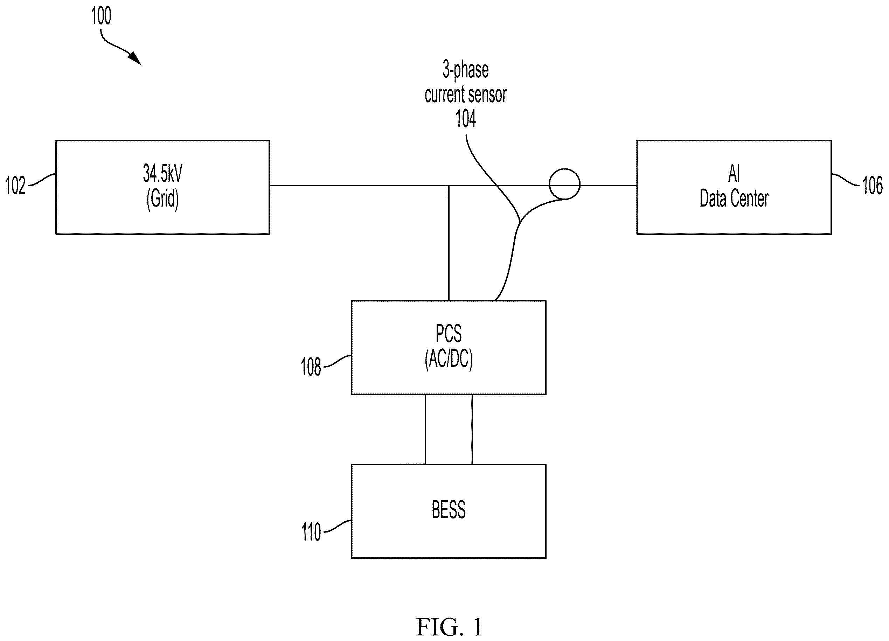

FIG. 1 illustrates a controller within a PCS that is configured to manage power into and out of a data center from the power grid and based, at least in part, on a three-phase current sensor located proximate to a data center side or a power grid side of the overall system, according to some embodiments.

In an overall system 100 shown in FIG. 1, a power grid 102 is configured to provide power to a data center 106. As incoming power from the power grid 102 is typically high-voltage AC power, e.g., 34.5 kV, as shown in FIG. 1, a PCS 108 may be located proximate to the data center 106 and may be configured to convert the high-voltage AC power to a lower voltage AC power, and then to DC power. The Battery Energy Storage System (BESS) 110 is thus coupled to the power grid 102 via the PCS 108, wherein the PCS 108 manages the power provided by the power grid.

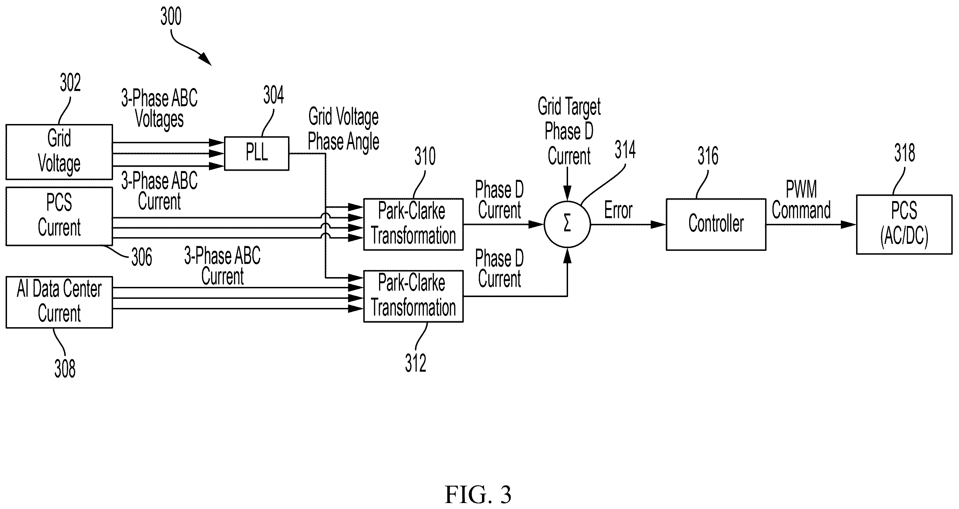

In order to improve response time of the PCS 108 and the BESS 110 in providing high-power and variable demands of the data center 106, a three-phase current sensor 104 may be located on the data center side, as illustrated in the particular embodiment shown in FIG. 1, or on the power grid side. In some embodiments, the three-phase current sensor 104 is configured to measure a rate of electricity at the location of the sensor and provide those measurements to a controller of the PCS 108. An illustration of a controller of the PCS 108 is shown via a controller 316 in FIG. 3.

As additionally described below, current measurements from the three-phase current sensor 104 and from another current sensor within the PCS 108 may be provided as inputs to a control algorithm that is then configured to rapidly detect a change in workload at the data center 106 and subsequently respond to the change by either delivering or absorbing power to or from the power grid. In some embodiments, this method of detection and response enables for constant or nearly constant power delivery from the power grid 102 to the data center 106, even when a given AI workload may fluctuate between 30% and 100% every second.

The overall system 100 is further configured to track AC voltage from the power grid 102, such as by using a Phase Locked Loop (PLL), to transform the AC voltage and current into equivalent DC signals using the Parks-Clarke transformation. Such a transformation from AC to equivalent DC signals may be written by the following: $f_{qdo} = K_s \cdot f_{abc}$, wherein $K_S$ may also be written as:

$$K_s = \frac{2}{3} \begin{bmatrix} \cos(\theta) & \cos\left(\theta - \frac{2}{3}\pi\right) & \cos\left(\theta - \frac{2}{3}\pi\right) \\ \sin(\theta) & \sin\left(\theta - \frac{2}{3}\pi\right) & \sin\left(\theta - \frac{2}{3}\pi\right) \\ \frac{1}{2} & \frac{1}{2} & \frac{1}{2} \end{bmatrix}.$$

The angle theta ($\theta$) in the above equation may be derived from the PLL and is equivalent to the instantaneous angle of the power grid voltage.

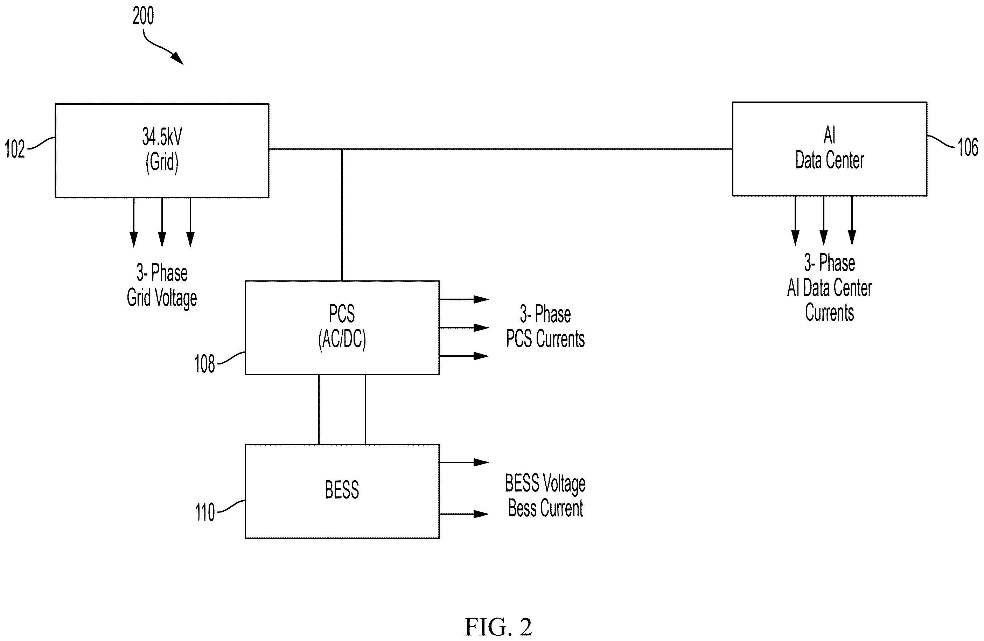

FIG. 2 illustrates a visual indication of voltage and current measurements that are used to perform the management of power into and out of the data center within an overall system such as that which is illustrated in FIG. 1, according to some embodiments.

The overall system 200 may resemble the overall system 100, introduced above. For ease of discussion herein and in particular for discussion of the feedback control loop illustrated in the following FIG. 3, arrows indicating "three-phase grid voltage," "three-phase PCS currents," "BESS voltage," "BESS current," and "three-phase AI data center currents" are shown in the figure. It should be understood that power grid voltages of the power grid 102 may be measured within the PCS 108, according to some embodiments, but are illustrated as shown in the figure for ease of discussion.

FIG. 3 illustrates a feedback control loop that corresponds to the management of power into and out of the data center within an overall system such as that which is illustrated in FIG. 1, according to some embodiments.

In some embodiments, components of the feedback control loop 300 may correspond to both hardware components that are illustrated in FIGS. 1 and 2, and to sensor signals that are visually illustrated in FIG. 2. For example, the power grid voltage 302 refers to the arrows in FIG. 2 that are labeled "three-phase grid voltage," and thus to three-phase voltage of incoming AC power from the power grid 102. Similarly, a PCS current 306 refers to the arrows in FIG. 2 that are labeled "three-phase PCS currents," and an AI data center current 308 refers to the arrows in FIG. 2 that are labeled "three-phase AI data center currents."

As shown in FIG. 3, the power grid voltage 302, also referred to in the figure as three-phase ABC voltages, is provided to a PLL 304, which rapidly and accurately measures the power grid voltage frequency and phase angle relative to a given phase, also referred to in the figure as grid voltage phase angle. In some embodiments, Phase A is selected as the reference, but any phase may similarly be used as the reference phase. In other embodiments, multiple phases may be used as the reference phase.

The PCS current 306, also referred to in the figure as three-phase ABC current, is then provided as an input to the Parks-Clarke transformation 310 along with the power grid voltage phase angle, wherein the output of the Parks-Clarke transformation 310 is the transformation to an equivalent phase D current.

An AI data center current 308, also referred to in the figure as three-phase ABC current, is then provided as an input to the Parks-Clarke transformation 312 along with the power grid voltage phase angle, wherein the output of the Parks-Clarke transformation 312 is the transformation to an equivalent phase D current.

Both phase D currents become DC signals when instantaneous grid voltage angle is applied, according to some embodiments. Moreover, for ease of discussion herein, it may be assumed that voltages and currents are balanced and do not have harmonic components, and thus phase Q and phase D values are zero. However, it should be understood that implementations of the control feedback loop 300 would include additional feedback loops for those phases that would regulate them to specified values accordingly.

Continuing with illustration of the control feedback loop 300, the phase D currents of the PCS and of the AI data center are compared against another signal, labeled "grid target phase D current" in the figure, at a step illustrated as a comparison ($\Sigma$) 314. The "grid target phase D current" signal may be defined as an average value of the AI data center phase D current plus or minus some value, which ensures that the battery within the BESS 110 does not fully discharge or become overcharged.

The output of comparison ($\Sigma$) 314 is a difference, or "error," between the respective signals. The error is then provided to the controller 316, such as a Proportional Integral Derivative (PID) controller, which is then configured to produce a pulse-width modulation (PWM) command that is then provided to a PCS 318. The PCS 318 then generates a current that reduces the error to zero.

The PCS phase D current is compared with the AI Data Center Phase D current which produces a difference (error). The error is sent to the controller 316, such as a Proportional Integral Derivative (PID) controller. The controller 316 produces a PWM command that goes to the PCS 318, which generates a current that reduces the error to zero.

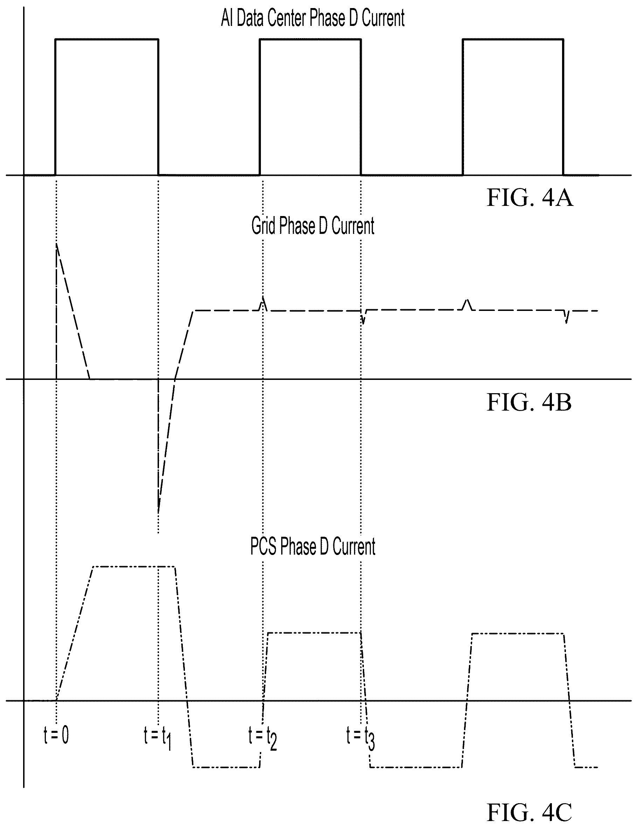

FIGS. 4A, 4B, and 4C illustrate examples of phase D current measured at the data center 106, measured on the power grid side, and measured at the PCS 108, respectively, from a moment in time corresponding to the onset of an AI workload at the data center 106 and through a subsequent period of time in which power to and from the power grid 102 is managed from and to the data center 106, according to some embodiments. FIGS. 4A, 4B, and 4C should be understood within a context of operations of the controller 316.

It may be assumed that each of the three phase D currents shown in FIGS. 4A, 4B, and 4C start at zero at time $t = 0$. Time $t = 0$ may also refer to the moment in time at which an HPC or AI workload at the data center 106 steps up to some value. The power grid current then jumps up to that same value, as shown in FIG. 4B, in order to support the power demand of the new HPC or AI workload. The controller 316 then measures the difference, or "error" illustrated in FIG. 3, and subsequently raises its current level, thus taking power from the BESS 110, until it reaches the same value as the HPC or AI workload.

Then, at time t = $t_1$, the HPC or AI workload drops to zero, and thus the current from the BESS 110 now flows back to the power grid 102, as indicated by the negative power grid current shown in FIG. 4B. The controller 316 then quickly ramps to a negative value that is approximately the average value of the last AI load pulse. The power grid current reverses direction, as shown in FIG. 4B, and settles as a positive value that is approximately the average value of the last AI load pulse.

At time t = $t_2$, the AI workload then ramps up, and the controller 316 then quickly reverses the current direction such that the BESS 110 provides the peak of the AI workload while the power grid 102 continues to provide the average.

This process may then repeat, as shown at time t = $t_3$, such that the power grid 102 provides the average power to the data center 106, while the BESS 110 provides the peak and draws the average current from the power grid to recharge the batteries within the BESS 110. The incremental changes at time t = $t_3$ and beyond in FIG. 4B indicate the response time of the controller 316.

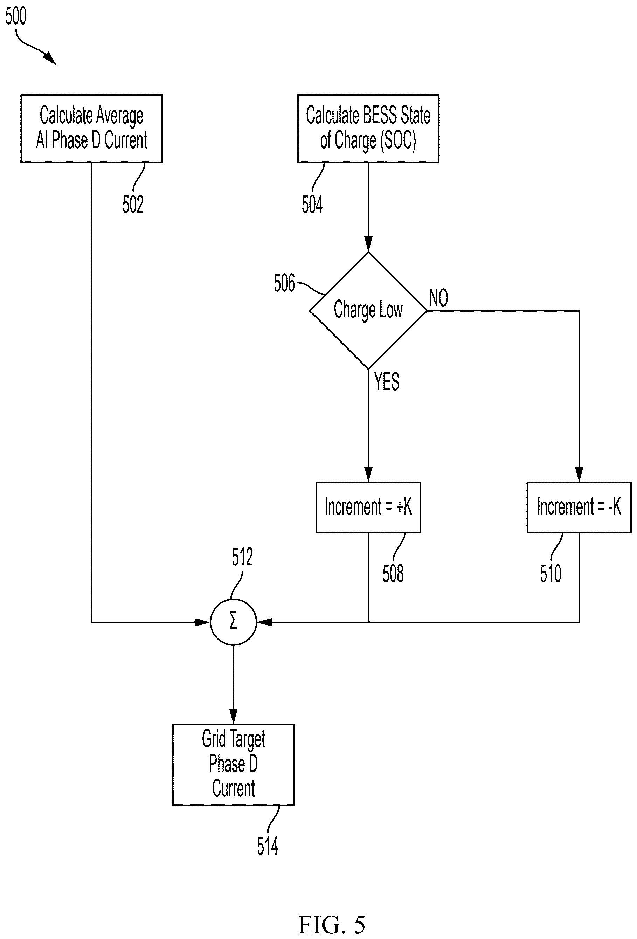

FIG. 5 is a flowchart that illustrates the execution of a control algorithm by the controller within the PCS 108, according to some embodiments.

A process 500 may be implemented using both the hardware components and the feedback control loop architecture described above with regard to FIGS. 1 - 4C. As shown in FIG. 5, a power grid target phase D current, in block 514, is obtained by firstly computing an average AI current, as indicated in block 502. Next, in block 504, the BESS State of Charge (SOC) is then computed. As then indicated by diamond 506, if the battery is becoming discharged, then the controller raises the average power grid current by some amount (+K), as indicated by block 508. If the battery is becoming overcharged, then the controller lowers the average power grid current by some amount (- K), as indicated by block 510.

In other embodiments, a feedback controller may slowly regulate the average target current over a period of time to balance the battery SOC.

In some embodiments, the power grid target phase D current may thus be defined as the average plus the increment (±K). The computation 512 resulting in average phase D current may be written as follows:

$$Average\ Phase\ D\ Current = \frac{(Phase\ D_{min} \cdot T_{min} + Phase\ D_{max} \cdot T_{max})}{T_{min} + T_{max}},$$

wherein $T_{min}$ is the time at the low level and $T_{max}$ is the time at the peak of the current HPC or AI workload currently being executed at the data center.

In other embodiments, other methods, such as analog or digital filtering, may instead be applied to derive the average AI phase D current.

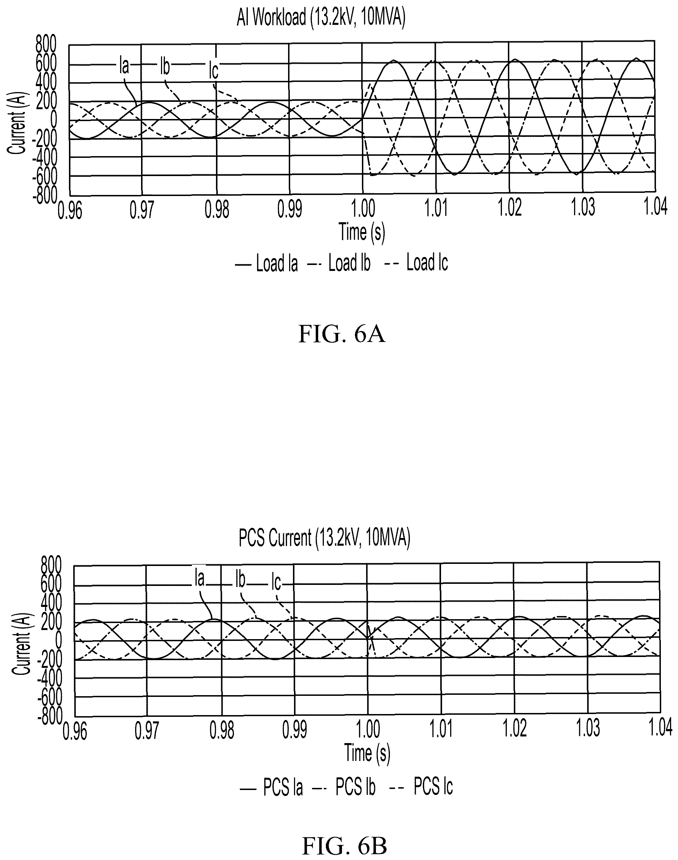

FIG. 6A illustrates a simulation of current vs time for a duration of an example AI workload being executed at the data center, according to some embodiments.

FIG. 6B illustrates a simulation of current vs time that is measured at the PCS for the duration of the example AI workload being executed at the data center, according to some embodiments.

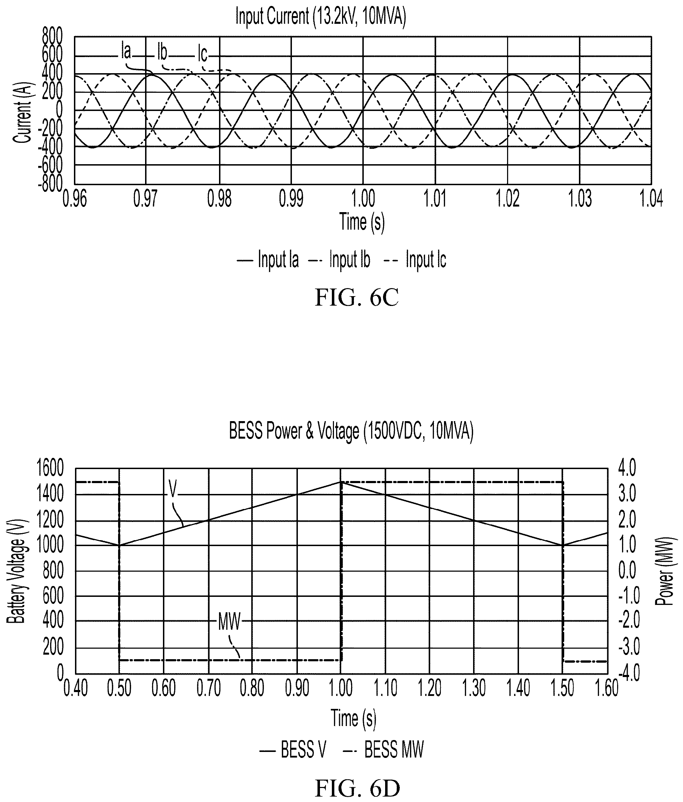

FIG. 6C illustrates input current vs time for the duration of the example AI workload being executed at the data center, according to some embodiments.

FIG. 6D illustrates battery voltage and power that is measured at the BESS for the duration of the example AI workload being executed at the data center, according to some embodiments.

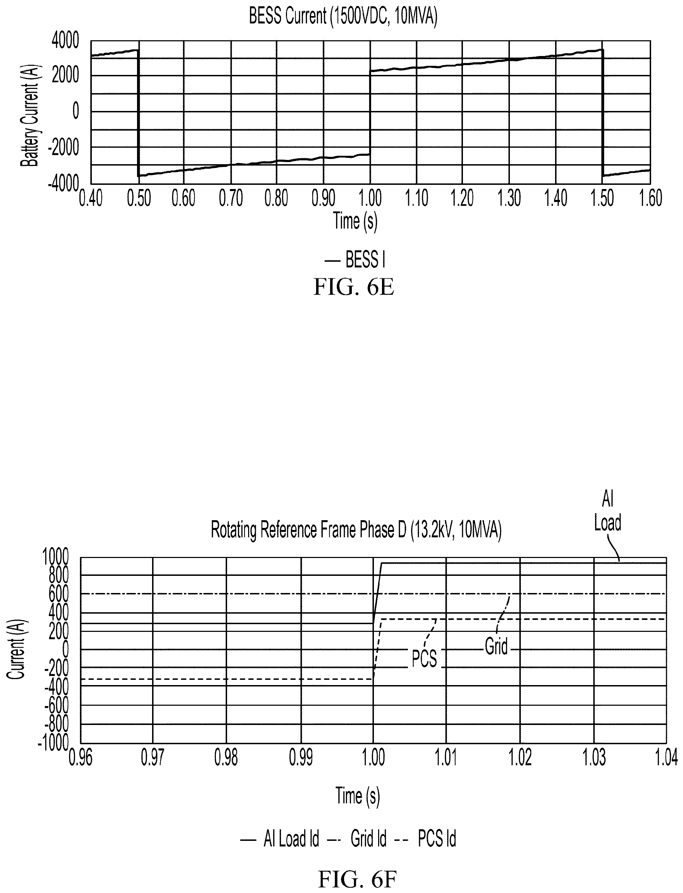

FIG. 6E illustrates battery current that is measured at the BESS for the duration of the example AI workload being executed at the data center, according to some embodiments.

FIG. 6F illustrates current vs time of the current of the AI load at the data center, the current on the power grid side, and the current measured at the PCS for the duration of the example AI workload being executed at the data center, according to some embodiments.

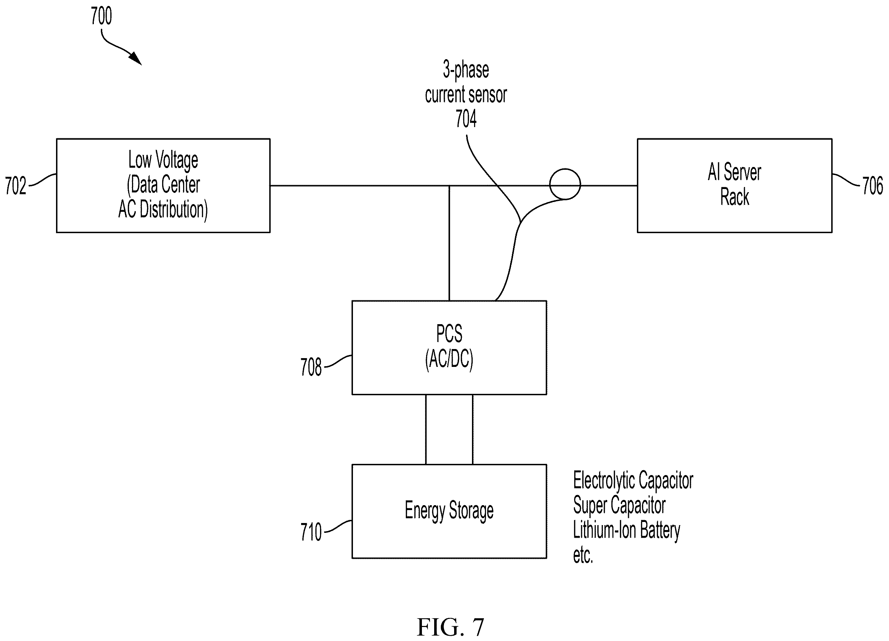

FIG. 7 illustrates another example of a controller within a PCS 708 that is configured to manage power into and out of a server rack 706 at a data center from the low voltage AC distribution unit of the data center and based, at least in part, on a three-phase current sensor 704 located proximate to the server rack 706 or to the low voltage AC distribution unit of the overall system 700, according to some embodiments. An illustration of a controller of the PCS 708 is shown via the controller 316 in FIG. 3.

In such embodiments, a similar current measurement scheme using a three-phase current sensor 704 that is located proximate to the server rack 706 or to the low voltage AC distribution unit of the data center may be provided into a similar feedback control loop, such as that which is illustrated in FIG. 3. The electrical location of the PCS 708 and energy storage device 710 may be modified accordingly.

Moreover, the energy storage device 710 of the overall system 700 may refer to any energy storage device that is compatible with low voltage AC distribution, such as electrolytic capacitors, super capacitors, lithium-ion batteries, etc.

Also disclosed are the following numbered items:

1. A system for managing power to a data center, the system comprising:

a three-phase current sensor, configured to provide current measurements to a power conversion system, wherein the three-phase current sensor is located along a power grid that is providing power to the data center; and the power conversion system for the data center, comprising a controller, wherein: the power conversion system is configured to control a rate of power that is provided to the data center from the power grid and from a battery energy storage system that is coupled to the power conversion system; and to control the rate of power, the controller is configured to: receive an indication of a difference in current between current measured at the data center and current measured by the power grid based, at least in part, on the current measurements provided by the three-phase current sensor; and cause one or both of the rate of power from the power grid and the rate of power from the battery energy storage system to be adjusted based, at least in part, on the indication of the difference, to reduce the difference to approximately zero.

2. The system of item 1, wherein the controller is a Proportional Integral Derivative controller.

3. The system of item 1 or 2, wherein the controller is further configured to compute a state of charge of the battery energy storage system.

4. The system of item 3, wherein the controller is further configured to: determine, based on the computed state of charge, that the battery energy storage system is becoming discharged; and cause the rate of power from the battery energy storage system to be raised to rebalance the state of charge of the battery energy storage system.

5. The system of item 3 or 4, wherein the controller is further configured to: determine, based on the computed state of charge, that the battery energy storage system is becoming overcharged; and cause the rate of power from the battery energy storage system to be lowered to rebalance the state of charge of the battery energy storage system.

6. The system of any preceding item, wherein the battery energy storage system comprises an electrolytic capacitor that is compatible with low voltage, Alternating Current (AC) distribution.

7. The system of any preceding item, wherein the battery energy storage system comprises a super capacitor that is compatible with low voltage, Alternating Current (AC) distribution.

8. The system of any preceding item, wherein the battery energy storage system comprises a lithium-ion battery that is compatible with low voltage, Alternating Current (AC) distribution.

While example embodiments have been described with reference to the figures, it will be understood by those of ordinary skill in the art that various changes in form and details may be made therein without departing from the scope as defined by the following claims.

**Claims**

1. A system for managing power to a data center (106), the system comprising:

a three-phase current sensor (104), configured to provide current measurements to a power conversion system (108), wherein the three-phase current sensor is located proximate to the data center or wherein the three-phase current sensor is located along a power grid (102) configured to provide power to the data center; and the power conversion system for the data center, comprising a controller (316), wherein:

the power conversion system is configured to control a rate of power that is provided to the data center from the power grid and from a battery energy storage system (110) that is coupled to the power conversion system; and

to control the rate of power, the controller is configured to:

receive an indication of a difference in current between current measured at the data center and current measured by the power grid based, at least in part, on the current measurements provided by the three-phase current sensor; and

cause one or both of the rate of power from the power grid and the rate of power from the battery energy storage system to be adjusted based, at least in part, on the indication of the difference, to reduce the difference to approximately zero.

2. The system of claim 1, wherein the controller is a Proportional Integral Derivative controller.

3. The system of claim 1 or 2, wherein the controller is further configured to compute a state of charge of the battery energy storage system.

4. The system of claim 3, wherein the controller is further configured to:

determine, based on the computed state of charge, that the battery energy storage system is becoming discharged; and

cause the rate of power from the battery energy storage system to be raised to rebalance the state of charge of the battery energy storage system.

5. The system of claim 3 or 4, wherein the controller is further configured to:

determine, based on the computed state of charge, that the battery energy storage system is becoming overcharged; and

cause the rate of power from the battery energy storage system to be lowered to rebalance the state of charge of the battery energy storage system.

6. The system of any preceding claim, wherein the battery energy storage system comprises an electrolytic capacitor (710) that is compatible with low voltage, Alternating Current "AC" distribution.

7. The system of any preceding claim, wherein the battery energy storage system comprises a super capacitor that is compatible with low voltage, Alternating Current "AC" distribution.

8. The system of any preceding claim, wherein the battery energy storage system comprises a lithium-ion battery that is compatible with low voltage, Alternating Current "AC" distribution.

9. A method for managing power to a data center (500), the method comprising:

receiving three-phase voltage from a power grid (102);

receiving a first three-phase current from a power conversion system (108) that is coupled to a battery energy storage system (110);

receiving a second three-phase current from a data center (106);

applying a Phase Locked Loop (304) to measure a frequency and a phase angle of the three-phase voltage from the power grid relative to a given phase;

performing a first Parks-Clarke transformation (310) to the first three-phase current and the phase angle of the three-phase voltage to output a first equivalent phase current;

performing a second Parks-Clarke transformation (312) to the second three-phase current and the phase angle of the three-phase voltage to output a second equivalent phase current;

comparing the first equivalent phase current and the second equivalent phase current to an average equivalent phase current from the data center to output a difference between the three equivalent phase currents; and

outputting a pulse-width modulation command to the power conversion system to generate a fourth equivalent phase current that reduces the difference to approximately zero.

10. The method of claim 9, further comprising computing a state of charge of the battery energy storage system (504).

11. The method of claim 9 or 10, further comprising:

determining, based on the computed state of charge, that the battery energy storage system is becoming discharged; and

causing a rate of power from the battery energy storage system to be raised to rebalance the state of charge of the battery energy storage system.

12. The method of any of claims 9 to 11, further comprising:

determining, based on the computed state of charge, that the battery energy storage system is becoming overcharged; and

causing a rate of power from the battery energy storage system to be lowered to rebalance the state of charge of the battery energy storage system.

FIG. 1

EP 4 742 484 A1

FIG. 2

300

302 Grid Voltage

3-Phase ABC Voltages

304 PLL

Grid Voltage Phase Angle

306 PCS Current

3-Phase ABC Current

308 AI Data Center Current

3-Phase ABC Current

310 Park-Clarke Transformation

312 Park-Clarke Transformation

Phase D Current

Phase D Current

Grid Target Phase D Current

314 Σ

Error

316 Controller

PWM Command

318 PCS (AC/DC)

FIG. 3

AI Data Center Phase D Current

FIG. 4A

Grid Phase D Current

FIG. 4B

PCS Phase D Current

$t = 0$    $t = t_1$    $t = t_2$    $t = t_3$

FIG. 4C

500

Calculate Average
AI Phase D Current

502

Calculate BESS State
of Charge (SOC)

504

506

Charge Low

NO

YES

Increment = +K

508

Increment = -K

510

512

Σ

Grid Target
Phase D
Current

514

FIG. 5

AI Workload (13.2kV, 10MVA)

— Load Ia — Load Ib — Load Ic

FIG. 6A

PCS Current (13.2kV, 10MVA)

— PCS Ia — PCS Ib — PCS Ic

FIG. 6B

FIG. 6C

FIG. 6D

BESS Current (1500VDC, 10MVA)

— BESS I

FIG. 6E

Rotating Reference Frame Phase D (13.2kV, 10MVA)

— AI Load Id  —· Grid Id  -- PCS Id

FIG. 6F

706

AI Server
Rack

3-phase
current sensor
704

700

702

Low Voltage
(Data Center
AC Distribution)

PCS
(AC/DC)

708

Energy Storage

710

Electrolytic Capacitor
Super Capacitor
Lithium-Ion Battery
etc.

**FIG. 7**

Europäisches
Patentamt

European
Patent Office

Office européen
des brevets

# EUROPEAN SEARCH REPORT

**Application Number**

EP 25 21 4839

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/344217 A1 (SHAIKH KARIMULLA RAJA [US] ET AL) 4 November 2021 (2021-11-04) * paragraphs [0032] - [0040]; figures 1-2 * | 1-12 | INV.<br>H02J3/32<br>H02J7/34<br>H02J7/00 |
| X | US 2022/100250 A1 (SHAIKH KARIMULLA RAJA [US] ET AL) 31 March 2022 (2022-03-31) * paragraphs [0048] - [0067]; figures 5-11 * | 1-12 | |
| A | US 11 984 759 B2 (UNIV NORTH CAROLINA CHARLOTTE [US]) 14 May 2024 (2024-05-14) * the whole document * | 1-12 | |
| A | US 2021/296900 A1 (WANES OHANNES [CA] ET AL) 23 September 2021 (2021-09-23) * the whole document * | 1-12 | |
| A | US 2016/352116 A1 (KATAYAMA KYOSUKE [JP] ET AL) 1 December 2016 (2016-12-01) * the whole document * | 1-12 | |

**TECHNICAL FIELDS SEARCHED (IPC)**

H02J

The present search report has been drawn up for all claims

| Place of search | Date of completion of the search | Examiner |
|---|---|---|
| Munich | 25 March 2026 | Hunckler, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 4839

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2026

| Patent document cited in search report | | Publication date | Patent family member(s) | | Publication date |
|---|---|---|---|---|---|
| US 2021344217 | A1 | 04-11-2021 | NONE | | |
| US 2022100250 | A1 | 31-03-2022 | NONE | | |
| US 11984759 | B2 | 14-05-2024 | US | 2022216726 A1 | 07-07-2022 |
| | | | US | 2024297526 A1 | 05-09-2024 |
| | | | WO | 2020236826 A1 | 26-11-2020 |
| US 2021296900 | A1 | 23-09-2021 | NONE | | |
| US 2016352116 | A1 | 01-12-2016 | EP | 3104487 A1 | 14-12-2016 |
| | | | JP | 6158107 B2 | 05-07-2017 |
| | | | JP | 2015149840 A | 20-08-2015 |
| | | | US | 2016352116 A1 | 01-12-2016 |
| | | | WO | 2015118747 A1 | 13-08-2015 |

EPO FORM P0459

For more details about this annex : see Official Journal of the European Patent Office, No. 12/82

**Patent documents cited in the description**

- US 63719332